# EUROPEAN PATENT APPLICATION

(11) **EP 3 200 449 A1**
(43) Date of publication of application: **02.08.2017**
(21) Application number: 15843294.8
(22) Date of filing: 14.09.2015
(51) Int. Cl.: H04N 7/18, B60R 1/00, B60R 21/00, H04N 5/225, H04N 5/232

(54) **ON-BOARD ELECTRONIC MIRROR**

(30) Priority: 24.09.2014 JP 2014194348
(71) Applicant: Panasonic Intellectual Property Management Co., Ltd., Osaka-shi, Osaka 540-6207 (JP)
(72) Inventor: SASAGUCHI, Atsumi, 2-1-61, Shiromi Chuo-ku Osaka-shi Osaka 540-6207 (JP); SHIRAI, Junichi, 2-1-61, Shiromi Chuo-ku Osaka-shi Osaka 540-6207 (JP); AIHARA, Yuichiro, 2-1-61, Shiromi Chuo-ku Osaka-shi Osaka 540-6207 (JP)
(74) Representative: Schwabe - Sandmair - Marx
(86) International application number: PCT/JP2015/004673
(87) International publication number: WO 2016/047087

(57) **Abstract**

The purpose of the present invention is to prevent screen flicker when the screen of an on-board electronic mirror changes at a high speed, and to provide optimal information to a user. An on-board electronic mirror (10), which is mounted on a vehicle, is provided with: a camera (100) for capturing images of the periphery of the vehicle; a video signal processing circuit (101) for processing the video captured by the camera (100); a monitor (105) for displaying the images processed by the video signal processing circuit (101); sensors (107-111) that are mounted on the vehicle and that detect an event during travel of the vehicle; and a video signal change circuit (103) and a video signal control circuit (112) that, on the basis of the detection results of the sensors (107-111), perform control for changing the video captured by the camera (100) to different video.

## Description

### Technical Field

The present invention relates to an in-vehicle electronic mirror.

### Background Art

In recent years, high speed image pickup devices that perform slow motion reproduction and the like are used in various fields. In such high speed image pickup devices, imaging is performed at a speed greater than a standard speed (30 frames per second in the case of NTSC scheme, and 25 frames per second in the case of PAL scheme), and the image data is reproduced at the standard speed, and in this manner, the user can see a slow motion image. For example, when an image data imaged at a speed by N times of the standard speed is reproduced at the standard speed, the user can observe the movement of the subject whose speed is reduced by 1/n.

As is well known, slow motion images are suitable for motion analysis of athletes and judgment in the game, and are significantly usable for kinetic analysis in industrial production fields and various academic researches.

In view of this, in the case where a moving subject (for example, a moving athlete) is imaged, the imaging has to be carried out at the imaging speed set in advance after imaging is once started even when the movement of the subject includes an important movement and a movement which is not important.

When the imaging speed is set to slow in advance, the image data amount of the imaging can be small, but the time resolution of the important movement is low. In contrast, when the imaging speed is set to relatively high, the time resolution of the important movement is high, but the movement which is not important is also imaged at the high imaging speed. Consequently, the image data amount extremely increases, and high-capacity memory becomes necessary, that is, manufacturing cost of the apparatus increases.

Under such circumstances, PTL 1 discloses a high-speed image pickup device which performs imaging such that an important movement of the subject is imaged with a high time resolution when the movement of the subject includes an important movement and a movement which is not important, for example. In this manner, the high speed image pickup device disclosed in PTL 1 can reduce the image data amount as much as possible, and imaging can be appropriately performed in accordance with the movement of the subject.

### Citation List

### Patent Literature

PTL 1
Japanese Patent Application Laid-Open No. 2004-120384

### Summary of Invention

### Technical Problem

The high speed image pickup device disclosed in PTL 1 can change the frame rate during the imaging at a speed higher than the standard speed; however, in this device, the situation where the device is mounted in a vehicle is not taken into consideration. That is, with the high speed image pickup device disclosed in PTL 1, when the imaged image is displayed on an in-vehicle electronic mirror, the screen of the mirror may possibly be speedily changed, thus causing flicker.

An object of the present invention is to provide an in-vehicle electronic mirror which can prevent flicker of the screen at the time when the screen of the in-vehicle electronic mirror is speedily changed, and, can provide the user with suitable information.

### Solution to Problem

An in-vehicle electronic mirror of an embodiment of the present invention is mounted in a vehicle, and includes : a camera that images a region around the vehicle; an image processing section that processes an image imaged by the camera; a monitor that indicates an image processed by the image processing section; a sensor that is mounted in the vehicle, and detects an event which occurs during travel of the vehicle; and a control section that converts an image imaged by the camera into another image based on a detection result of the sensor.

### Advantageous Effects of Invention

According to the present invention, flicker of the screen at the time when the screen of the in-vehicle electronic mirror is speedily changed can be prevented, and suitable information can be provided to the user.

### Brief Description of Drawings

FIG. 1 illustrates a configuration of an in-vehicle electronic mirror according to Embodiment 1 of the present invention;
FIG. 2 illustrates a display of the in-vehicle electronic mirror according to Embodiment 1 of the present invention;
FIG. 3 illustrates a configuration of an in-vehicle electronic mirror according to Embodiment 2 of the present invention;
FIG. 4 illustrates a configuration of an in-vehicle electronic mirror according to Embodiment 3 of the present invention;
FIG. 5 illustrates a display of the in-vehicle electronic mirror according to Embodiment 3 of the present invention;
FIG. 6 illustrates a configuration of an in-vehicle electronic mirror according to Embodiment 4 of the present invention; and
FIG. 7 illustrates a display of an in-vehicle electronic mirror according to Embodiment 5 of the present invention.

### Description of Embodiments

Embodiments of the present invention are described below with reference to the accompanying drawings.

### (Embodiment 1)

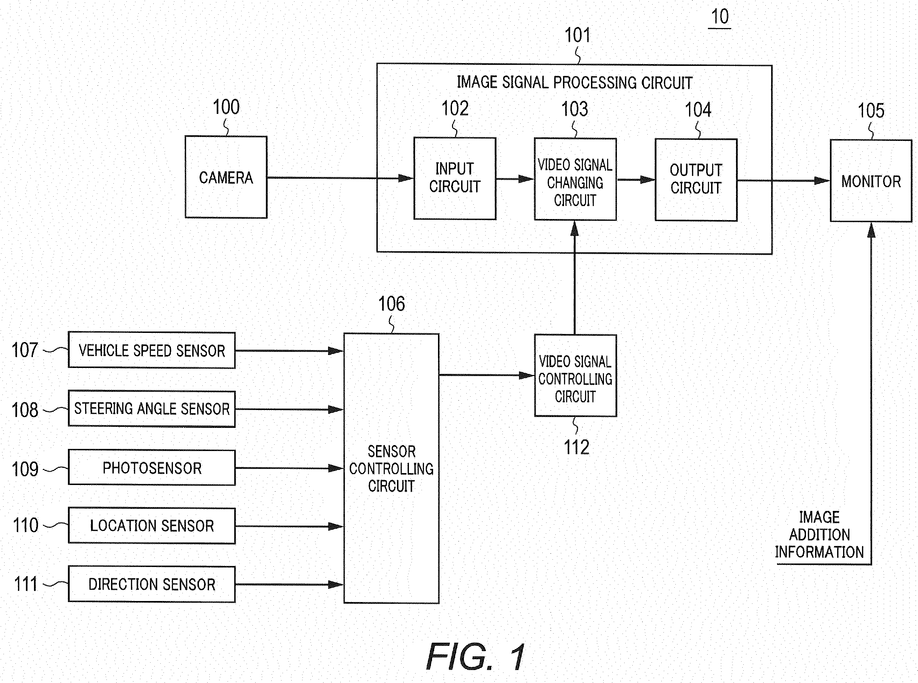

Embodiment 1 of the present invention is described with reference to FIG. 1. FIG. 1 illustrates a configuration of in-vehicle electronic mirror 10 according to the present embodiment.

In-vehicle electronic mirror 10 is mounted in a vehicle. It is to be noted that, while the vehicle is, for example, an automobile or a two-wheeled vehicle (a bike, a bicycle or the like), the vehicle may be other moving bodies (for example, a train, an aircraft or the like).

As illustrated in FIG. 1, in-vehicle electronic mirror 10 includes camera 100, image signal processing circuit 101, input circuit 102, video signal changing circuit 103, output circuit 104, monitor 105, sensor controlling circuit 106, vehicle speed sensor 107, steering angle sensor 108, photosensor 109, location sensor 110, direction sensor 111, and video signal controlling circuit 112.

Camera 100 images a region around the vehicle, and outputs the video signal to image signal processing circuit 101.

Image signal processing circuit 101 includes input circuit 102, video signal changing circuit 103, and output circuit 104.

Input circuit 102 receives a video signal from camera 100, performs a predetermined process on the video signal, and outputs the video signal video to signal changing circuit 103.

On the basis of a control signal received from video signal controlling circuit 112 described later, video signal changing circuit 103 converts the video signal received from input circuit 102 into another video signal. Then, video signal changing circuit 103 outputs the converted video signal to output circuit 104.

Output circuit 104 outputs the video signal received from video signal changing circuit 103 to monitor 105 described later.

On the basis of the video signal received from output circuit 104, monitor 105 displays an image imaged by camera 100 on a screen (which is also referred to as "display"), and indicates received image addition information on the screen.

Examples of the image addition information include: information representing a distance between a vehicle and an object (for example, a succeeding vehicle, a pedestrian, a building, a signal, a guardrail, a road label and the like), information representing approach of a succeeding vehicle or an emergency vehicle, information representing a time and/or a distance to a destination, information representing an environment and an event in a region around the vehicle (for example, weather, temperature, time and the like), information representing the installation position of camera 100, information representing an electronic compass, information representing an image (for example, an around view, or a rear view) imaged by a camera other than camera 100, information representing a predetermined switch, and the like.

Examples of the switch include a switch for requesting opening and closing of a garage, a switch for on/off of a lighting device of a garage, a switch for on/off of locking of a house, a switch for on/off of an outdoor light of a house, a switch for activating doorbell that indicates returning home in a house, and a switch for on/off of apparatuses in a house (for example, a lighting device, a bath, an air-conditioner and the like). The switch is not limited to the above-mentioned examples as long as the switch can perform remote control from the vehicle inside.

The above-mentioned image addition information may be information calculated based on the detection result of a sensor mounted in a vehicle (for example, sensors 107 to 111 described later, or a sensor not illustrated other than sensors 107 to 111), information acquired by radio communications between a vehicle and the vehicle outside, or information stored in advance in a storage part not illustrated which is mounted in a vehicle.

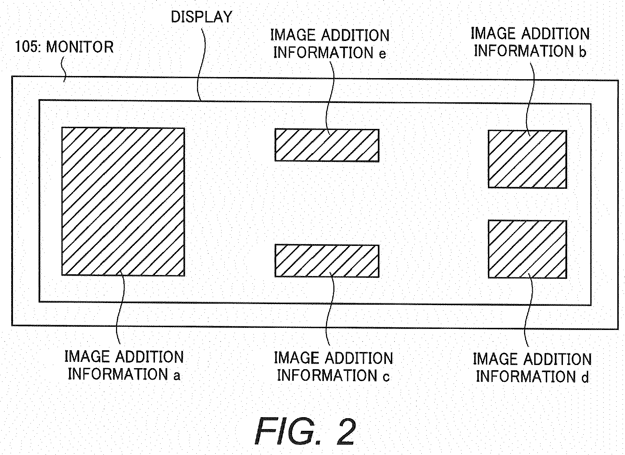

FIG. 2 illustrates an exemplary display of the image addition information. As illustrated in FIG. 2, image addition information a to e are displayed on the display (screen) of monitor 105 so as to be superimposed on an image from output circuit 104. The image addition information a to e is information representing a distance between a vehicle and an object, information representing an approach of a succeeding vehicle or an emergency vehicle, information representing a time and/or a distance to a destination, information representing an environment and an event in a region around the vehicle, information representing the installation position of camera 100, information representing an electronic compass, information representing an image imaged by a camera other than camera 100, or information representing a predetermined switch.

Sensor controlling circuit 106 receives a signal (hereinafter referred to as a detection result signal) from sensors 107 to 111 mounted in the vehicle, and controls output of detection result signals to video signal controlling circuit 112.

Sensors 107 to 111 are sensors mounted in the vehicle. Vehicle speed sensor 107 detects the speed of the vehicle. Steering angle sensor 108 detects the steering angle of the vehicle. Photosensor 109 detects the brightness in a region around the vehicle. Location sensor 110 detects the gear position of the transmission of the vehicle. Direction sensor 111 detects the direction of the directional indicator of the vehicle. The detection results of sensors 107 to 111 are output to sensor controlling circuit 106 as detection result signals as described above.

On the basis of a detection result signal received from sensor controlling circuit 106, video signal controlling circuit 112 generates a control signal representing the details of the control of video signal changing circuit 103 of image signal processing circuit 101, and outputs the control signal to video signal changing circuit 103. Examples of the control signal generated in this case are described below.

For example, when the detection result of vehicle speed sensor 107 is smaller than a predetermined threshold, video signal controlling circuit 112 generates a control signal for converting the input video signal into a video signal of a first frame rate (for example, 15 fps). On the other hand, when the detection result of vehicle speed sensor 107 is equal to or greater than the predetermined threshold, video signal controlling circuit 112 generates a control signal for converting the input video signal into a video signal of a second frame rate (for example, 30 fps) greater than the first frame rate.

In addition, for example, when the detection result of steering angle sensor 108 is smaller than a predetermined threshold, video signal controlling circuit 112 generates a control signal for converting the input video signal into a video signal of the first frame rate (for example, 15 fps). On the other hand, when the detection result of steering angle sensor 108 is equal to or greater than the predetermined threshold, video signal controlling circuit 112 generates a control signal for converting the input video signal into a video signal of the second frame rate (for example, 30 fps) greater than the first frame rate.

In addition, for example, when the detection result of photosensor 109 is smaller than a predetermined threshold, video signal controlling circuit 112 generates a control signal for converting the input video signal into a video signal of the first frame rate (for example, 15 fps). On the other hand, when the detection result of photosensor 109 is equal to or greater than the predetermined threshold, video signal controlling circuit 112 generates a control signal for converting the input video signal into a video signal of the second frame rate (for example, 30 fps) greater than the first frame rate.

It is to be noted that, for example, when the detection result of photosensor 109 is smaller than the predetermined threshold, video signal controlling circuit 112 may generate a control signal for conversion to a video signal of the second frame rate. On the other hand, when the detection result of photosensor 109 is equal to or greater than the threshold, video signal controlling circuit 112 may generate a control signal for conversion to a video signal of the first frame rate.

In addition, for example, when the detection result of location sensor 110 is a first gear position, video signal controlling circuit 112 generates a control signal for converting the input video signal into a video signal of the first frame rate (for example, 15 fps). On the other hand, when the detection result of location sensor 110 is a second gear position, video signal controlling circuit 112 generates a control signal for converting the input video signal into a video signal of the second frame rate (for example, 30 fps) greater than the first frame rate.

In addition, for example, when the detection result of direction sensor 111 is neither left turn nor right turn, video signal controlling circuit 112 generates a control signal for converting the input video signal into a video signal of the first frame rate (for example, 15 fps). On the other hand, when the detection result of direction sensor 111 is left turn or right turn, video signal controlling circuit 112 generates a control signal for converting the input video signal into a video signal of the second frame rate (for example, 30 fps) greater than the first frame rate.

It is to be noted that video signal changing circuit 103 may have a function of changing the optical axis of camera 100. For example, video signal controlling circuit 112 changes the optical axis of camera 100 in accordance with the detection result signal (steering angle) of steering angle sensor 108, and controls video signal changing circuit 103 to move the left and right segmentation of an image (in such a manner as morphing). In this manner, the image desired by the user can be displayed at a position in the proximity of the center of the screen and the user can easily visually recognize the image. In addition, it is possible to slightly suppress unnatural display of an image, and the user can easily visually recognize the image.

### (Embodiment 2)

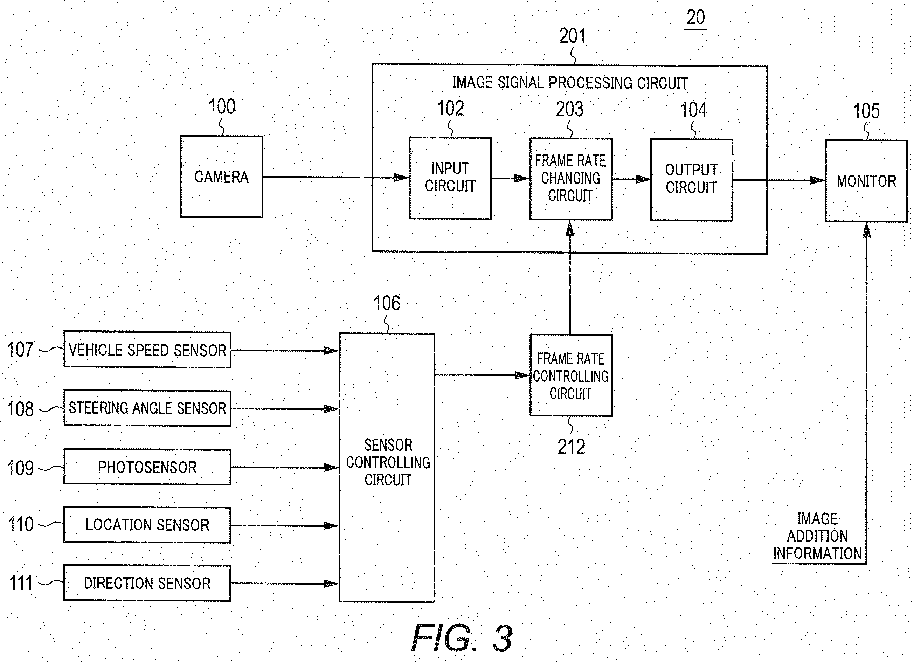

Embodiment 2 of the present invention is described below with reference to FIG. 3. FIG. 3 illustrates a configuration of in-vehicle electronic mirror 20 according to the present embodiment. The components illustrated in FIG. 3 are denoted with reference numerals which are identical to those of Embodiment 1 of FIG. 1. In the following, only components of FIG. 3 whose operation is different from Embodiment 1 are described.

Image signal processing circuit 201 includes frame rate changing circuit 203 in place of video signal changing circuit 103 of Embodiment 1.

On the basis of a control signal received from frame rate controlling circuit 212 described later, frame rate changing circuit 203 converts the video signal received from input circuit 102 into another video signal. For example, frame rate changing circuit 203 converts the frame rate of camera 100 on the basis of the control signal, thereby converting the video signal received from input circuit 102 into another video signal. Then, frame rate changing circuit 203 outputs the converted video to signal output circuit 104.

On the basis of a detection result signal received from sensor controlling circuit 106, frame rate controlling circuit 212 generates a control signal representing the details of the control of frame rate changing circuit 203 of image signal processing circuit 201, and outputs the control signal to frame rate changing circuit 203. Examples of the control signal generated in this case are described below.

For example, when the detection result of vehicle speed sensor 107 is smaller than a threshold (a given speed) (that is, when the vehicle is travelling at a speed lower than the threshold), frame rate controlling circuit 212 generates a control signal for requesting imaging at a first frame rate (for example, 30 fps). On the other hand, when the detection result of vehicle speed sensor 107 is equal to or greater than a threshold (that is, when the vehicle is travelling at a speed equal to or higher than the threshold), frame rate controlling circuit 212 generates a control signal for requesting imaging at a second frame rate (for example, 60 fps) greater than the first frame rate.

In addition, for example, when the detection result of steering angle sensor 108 is smaller than a threshold (a given angle) (that is, when the vehicle has turned at a steering angle smaller than the threshold), frame rate controlling circuit 212 generates a control signal for requesting imaging at the first frame rate. On the other hand, when the detection result of steering angle sensor 108 is equal to or greater than a threshold (that is, when the vehicle has turned at a steering angle equal to or greater than the threshold), frame rate controlling circuit 212 generates a control signal for requesting imaging at the second frame rate.

In addition, for example, when the detection result of photosensor 109 is smaller than a threshold (a given brightness) (that is, when the vehicle is travelling in an environment where the brightness is smaller than the threshold), frame rate controlling circuit 212 generates a control signal for requesting imaging at the first frame rate. On the other hand, when the detection result of photosensor 109 is equal to or greater than the threshold (that is, when the vehicle is travelling in an environment where the brightness is equal to or greater than the threshold), frame rate controlling circuit 212 generates a control signal for requesting imaging at the second frame rate.

It is to be noted that, for example, when the detection result of photosensor 109 is smaller than the threshold (given brightness) (that is, when the vehicle is travelling in an environment where the brightness is smaller than the threshold), frame rate controlling circuit 212 may generate a control signal for requesting imaging at the second frame rate. On the other hand, when the detection result of photosensor 109 is equal to or greater than the threshold (that is, when the vehicle is travelling in an environment where the brightness is equal to or greater than the threshold), frame rate controlling circuit 212 may generate a control signal for requesting imaging at the first frame rate.

In addition, for example, when the detection result of location sensor 110 is the first gear position (that is, when the vehicle is travelling with a low speed gear), frame rate controlling circuit 212 generates a control signal for requesting imaging at the first frame rate. On the other hand, when the detection result of location sensor 110 is the second gear (that is, when the vehicle is travelling with a high speed gear), frame rate controlling circuit 212 generates a control signal for requesting imaging at the second frame rate.

In addition, for example, when the detection result of direction sensor 111 is neither left turn nor right turn (that is, when the directional indicator is not in operation), frame rate controlling circuit 212 generates a control signal for requesting imaging at the first frame rate. On the other hand, when the detection result of direction sensor 111 is left turn or right turn (that is, when the directional indicator is in operation), frame rate controlling circuit 212 generates a control signal for requesting imaging at the second frame rate.

### (Embodiment 3)

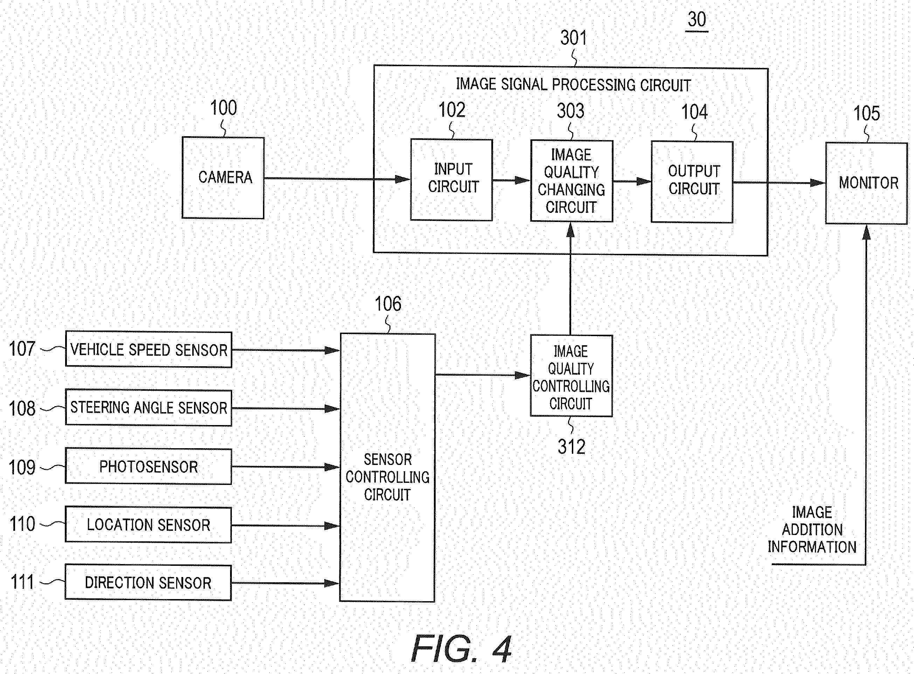

Embodiment 3 of the present invention is described below with reference to FIG. 4. FIG. 4 illustrates a configuration of in-vehicle electronic mirror 30 according to the present embodiment. The components illustrated in FIG. 4 are denoted with reference numerals which are identical to those of Embodiment 1 of FIG. 1. In the following, only components of FIG. 4 whose operation is different from Embodiment 1 are described.

Image signal processing circuit 301 includes image quality changing circuit 303 in place of video signal changing circuit 103 of Embodiment 1.

On the basis of a control signal received from image quality controlling circuit 312 described later, image quality changing circuit 303 converts the video signal received from input circuit 102 into another video signal. For example, image quality changing circuit 303 changes the image quality of camera 100 (for example, the resolution) on the basis of the control signal, thereby converting the video signal received from input circuit 102 into another video signal. Then, image quality changing circuit 303 outputs the converted video signal to output circuit 104.

On the basis of a detection result signal received from sensor controlling circuit 106, image quality controlling circuit 312 generates a control signal representing the details of the control of image quality changing circuit 303 of image signal processing circuit 301, and outputs the control signal to image quality changing circuit 303. Examples of the control signal generated in this case are described below.

For example, when the detection result of vehicle speed sensor 107 is smaller than a threshold (that is, when the vehicle is travelling at a speed lower than the threshold), image quality controlling circuit 312 generates a control signal for requesting imaging with a first image quality. On the other hand, when the detection result of vehicle speed sensor 107 is equal to or greater than the threshold (that is, when the vehicle is travelling at a speed equal to or higher than the threshold), image quality controlling circuit 312 generates a control signal for requesting imaging with a second image quality greater than the first image quality.

In addition, for example, when the detection result of steering angle sensor 108 is smaller than a threshold (that is, when the vehicle has turned at a steering angle smaller than the threshold), image quality controlling circuit 312 generates a control signal for requesting imaging with the first image quality. On the other hand, when the detection result of steering angle sensor 108 is equal to or greater than the threshold (that is, when the vehicle has turned at a steering angle equal to or greater than the threshold), image quality controlling circuit 312 generates a control signal for requesting imaging with the second image quality.

In addition, for example, when the detection result of photosensor 109 is smaller than a threshold (that is, when the vehicle is travelling in an environment where the brightness is smaller than the threshold), image quality controlling circuit 312 generates a control signal for requesting imaging with the first image quality. On the other hand, when the detection result of photosensor 109 is equal to or greater than the threshold (that is, when the vehicle is travelling in an environment where the brightness is equal to or greater than the threshold), image quality controlling circuit 312 generates a control signal for requesting imaging with the second image quality.

It is to be noted that, for example, when the detection result of photosensor 109 is smaller than the threshold (a given brightness) (that is, when the vehicle is travelling in an environment where the brightness is smaller than the threshold), image quality controlling circuit 312 may generate a control signal for requesting imaging with the second image quality. On the other hand, when the detection result of photosensor 109 is equal to or greater than the threshold (that is, when the vehicle is travelling in an environment where the brightness is equal to or greater than the threshold), image quality controlling circuit 312 may generate a control signal for requesting imaging with the first image quality.

In addition, for example, when the detection result of location sensor 110 is the first gear position (that is, when the vehicle is travelling with a low speed gear), image quality controlling circuit 312 generates a control signal for requesting imaging with the first image quality. On the other hand, when the detection result of location sensor 110 is the second gear (that is, when the vehicle is travelling with a high speed gear), image quality controlling circuit 312 generates a control signal for requesting imaging with the second image quality.

In addition, for example, when the detection result of direction sensor 111 is neither left turn nor right turn (that is, when the directional indicator is not in operation), image quality controlling circuit 312 generates a control signal for requesting imaging with the first image quality. On the other hand, when the detection result of direction sensor 111 is left turn or right turn (that is, when the directional indicator is in operation), image quality controlling circuit 312 generates a control signal for requesting imaging with the second image quality.

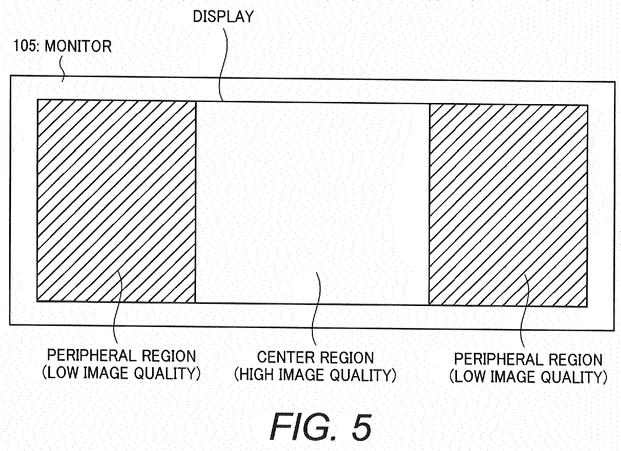

It is to be noted that, as illustrated in FIG. 5 for example, image quality controlling circuit 312 may generate a control signal for requesting imaging in which the image in the center region on monitor 105 is indicated with the second image quality (high image quality) and the image in the peripheral region on monitor 105 is indicated with the first image quality (low image quality).

For example, when the detection result of any of vehicle speed sensor 107, steering angle sensor 108, and photosensor 109 is smaller than the threshold, when the detection result of location sensor 110 is the first gear position, or when the detection result of direction sensor 111 is neither left turn nor right turn, image quality controlling circuit 312 generates a control signal as follows. Specifically, image quality controlling circuit 312 generates a control signal for requesting to set the center region to a first area, set the sum of two peripheral regions to a second area (for example, the area obtained by subtracting the first area from the entire display region), image an image to be displayed in the center region with a high image quality, and image an image to be displayed in the peripheral regions with a low image quality.

Meanwhile, for example, when the detection result of any of vehicle speed sensor 107, steering angle sensor 108, and photosensor 109 is equal to or greater than the threshold, when the detection result of location sensor 110 is the second gear position, or when the detection result of direction sensor 111 is left turn or right turn, image quality controlling circuit 312 generates a control signal as follows. Specifically, image quality controlling circuit 312 generates a control signal for requesting to set the center region to a third area greater than the first area, set the sum of two peripheral regions to a fourth area (for example, the area obtained by subtracting the third area from the entire region of the display), image an image to be displayed in the center region with a high image quality, and image an image to be displayed in the peripheral regions with a low image quality.

It is to be noted that, in the setting of the area of the center region, the changing of the field angle of Embodiment 4 may be applied.

### (Embodiment 4)

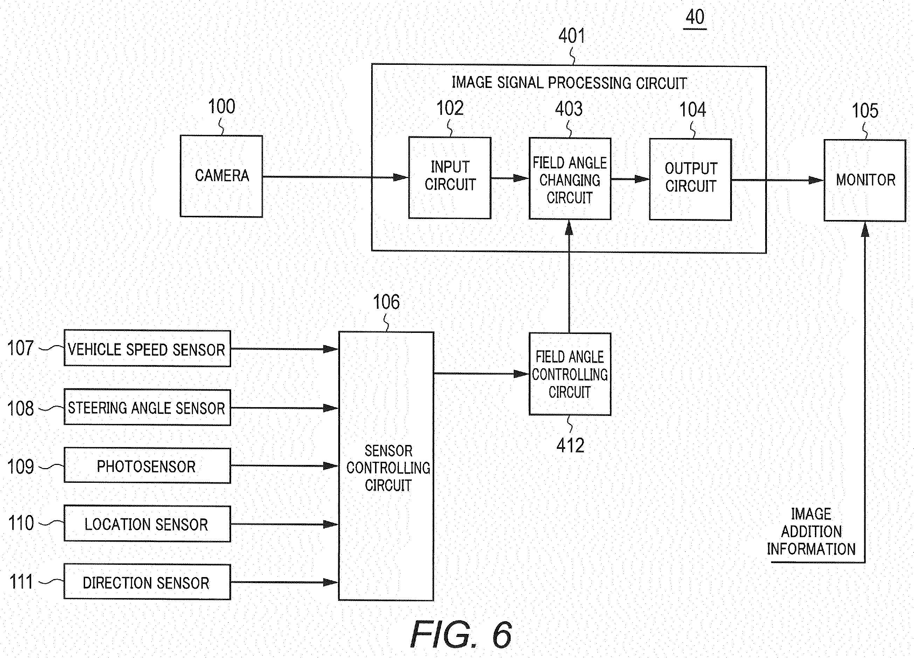

Embodiment 4 of the present invention is described below with reference to FIG. 6. FIG. 6 illustrates a configuration of in-vehicle electronic mirror 40 according to the present embodiment. The components illustrated in FIG. 6 are denoted with reference numerals which are identical to those of Embodiment 1 of FIG. 1. In the following, only components of FIG. 6 whose operation is different from Embodiment 1 are described.

Image signal processing circuit 401 includes field angle changing circuit 403 in place of video signal changing circuit 103 of Embodiment 1.

On the basis of the control signal received from field angle controlling circuit 412 described later, field angle changing circuit 403 converts the video signal received from input circuit 102 into another video signal. For example, field angle changing circuit 403 changes the field angle of camera 100 on the basis of the control signal, thereby converting the video signal received from input circuit 102 into another video signal. Then, field angle changing circuit 403 outputs the converted video signal to output circuit 104.

On the basis of a detection result signal received from sensor controlling circuit 106, field angle controlling circuit 412 generates a control signal representing the details of the control of field angle changing circuit 403 of image signal processing circuit 401, and outputs the control signal to field angle changing circuit 403. Examples of the control signal generated in this case are described below.

For example, when the detection result of vehicle speed sensor 107 is smaller than a threshold (that is, when the vehicle is travelling at a speed lower than the threshold), field angle controlling circuit 412 generates a control signal for requesting imaging at the first field angle. On the other hand, when the detection result of vehicle speed sensor 107 is equal to or greater than the threshold (that is, when the vehicle is travelling at a speed equal to or higher than the threshold), field angle controlling circuit 412 generates a control signal for requesting imaging at a second field angle greater than the first field angle.

In addition, for example, when the detection result of steering angle sensor 108 is smaller than a threshold (that is, when the vehicle has turned at a steering angle smaller than the threshold), field angle controlling circuit 412 generates a control signal for requesting imaging at the first field angle. On the other hand, when the detection result of steering angle sensor 108 is equal to or greater than the threshold (that is, when the vehicle has turned at a steering angle equal to or greater than the threshold), field angle controlling circuit 412 generates a control signal for requesting imaging at the second field angle.

In addition, for example, when the detection result of photosensor 109 is smaller than a threshold (that is, when the vehicle is travelling in an environment where the brightness is smaller than the threshold), field angle controlling circuit 412 generates a control signal for requesting imaging at the first field angle. On the other hand, when the detection result of photosensor 109 is equal to or greater than the threshold (that is, when the vehicle is travelling in an environment where the brightness is equal to or greater than the threshold), field angle controlling circuit 412 generates a control signal for requesting imaging at the second field angle.

It is to be noted that, for example, when the detection result of photosensor 109 is smaller than a threshold (a given brightness) (that is, when the vehicle is travelling in an environment where the brightness is smaller than the threshold), field angle controlling circuit 412 may generate a control signal for requesting imaging at the second field angle. On the other hand, when the detection result of photosensor 109 is equal to or greater than the threshold (that is, when the vehicle is travelling in an environment where the brightness is equal to or greater than the threshold), field angle controlling circuit 412 may generate a control signal for requesting imaging at the first field angle.

In addition, for example, when the detection result of location sensor 110 is the first gear position (that is, when the vehicle is travelling with a low speed gear), field angle controlling circuit 412 generates a control signal for requesting imaging at the first field angle. On the other hand, when the detection result of location sensor 110 is the second gear (that is, when the vehicle is travelling with a high speed gear), field angle controlling circuit 412 generates a control signal for requesting imaging at the second field angle.

In addition, for example, when the detection result of direction sensor 111 is neither left turn nor right turn (that is, when the directional indicator is not in operation), field angle controlling circuit 412 generates a control signal for requesting imaging at the first field angle. On the other hand, when the detection result of direction sensor 111 is left turn or right turn (that is, when the directional indicator is in operation), field angle controlling circuit 412 generates a control signal for requesting imaging at the second field angle.

### (Embodiment 5)

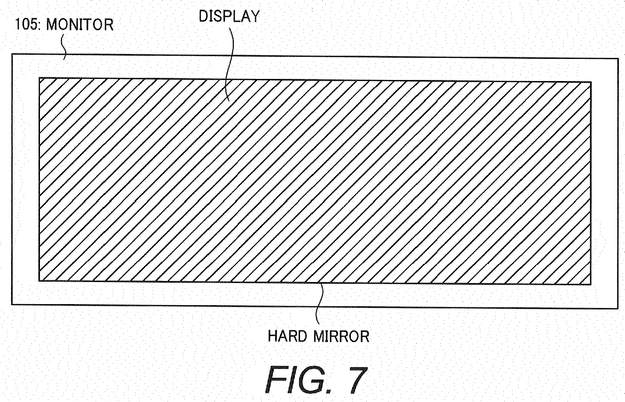

Embodiment 5 of the present invention is described below with reference to FIG. 7. FIG. 7 illustrates a display operation of an in-vehicle electronic mirror according to the present embodiment.

The in-vehicle electronic mirror of the present embodiment includes, for example, a monitor controlling circuit that receives a detection result signal from sensor controlling circuit 106 illustrated in FIG. 1 and so forth, and controls the display of monitor 105 on the basis of the detection result signal.

For example, when the detection result of any of vehicle speed sensor 107, steering angle sensor 108, and photosensor 109 is smaller than a threshold, when the detection result of location sensor 110 is the first gear position (low speed gear), or when the detection result of direction sensor 111 is neither left turn nor right turn, the monitor controlling circuit generates a control signal as follows. Specifically, the monitor controlling circuit generates a control signal for controlling monitor 105 such that the display of monitor 105 indicates an image on the basis of a video signal from output circuit 104, and outputs the control signal to monitor 105. In this manner, an image imaged by camera 100 is indicated on the display.

Meanwhile, for example, when the detection result of any of vehicle speed sensor 107, steering angle sensor 108, and photosensor 109 is equal to or greater than the threshold, when the detection result of location sensor 110 is the second gear position (high speed gear), or when the detection result of direction sensor 111 is left turn or right turn, the monitor controlling circuit generates a control signal as follows. Specifically, the monitor controlling circuit generates a control signal for controlling monitor 105 to switch the display to a hard mirror, and outputs the control signal to monitor 105. In this manner, as illustrated in FIG. 7, the entire region of the display is switched to a hard mirror.

It is to be noted that, for example, when the detection result of photosensor 109 is smaller than a threshold (a given brightness) (that is, when the vehicle is travelling in an environment where the brightness is smaller than the threshold), the monitor controlling circuit may generate a control signal for requesting to switch the display to a hard mirror. On the other hand, when the detection result of photosensor 109 is equal to or greater than the threshold (that is, when the vehicle is travelling in an environment where the brightness is equal to or greater than the threshold), the monitor controlling circuit may generate a control signal for requesting to indicate an image imaged by camera 100 on the display.

According to the present embodiment, it is possible to prevent flicker of the screen at the time when the screen of the in-vehicle electronic mirror speedily changes, and, it is possible to provide the most suitable information to the user (the passenger of the vehicle). As a result, fatigue of the user can be reduced to contribute to safe operation.

It is to be noted that the above-described embodiments may be arbitrarily combined. In addition, the present invention is not limited to the above-mentioned embodiments, and various modifications may be made.

This disclosure of Japanese Patent Application No. 2014-194348, filed on September 24, 2014, including the specification, drawings and abstract, is incorporated herein by reference in its entirety.

### Industrial Applicability

The present invention is applicable to an in-vehicle electronic mirror which can prevent flicker of the screen at the time when the screen of the in-vehicle electronic mirror speedily changes, and can prevent carsickness of the passenger.

### Reference Signs List

- 10, 20, 30, 40: In-vehicle electronic mirror
- 100: Camera
- 101, 201, 301, 401: Image signal processing circuit
- 102: Input circuit
- 103: Video signal changing circuit
- 104: Output circuit
- 105: Monitor
- 106: Sensor controlling circuit
- 107: Vehicle speed sensor
- 108: Steering angle sensor
- 109: Photosensor
- 110: Location sensor
- 111: Direction sensor
- 112: Video signal controlling circuit
- 203: Frame rate changing circuit
- 212: Frame rate controlling circuit
- 303: Image quality changing circuit
- 312: Image quality controlling circuit
- 403: Field angle changing circuit
- 412: Field angle controlling circuit

## Claims

1. An in-vehicle electronic mirror that is mounted in a vehicle, comprising:
a camera that images a region around the vehicle;
an image processing section that processes an image imaged by the camera;
a monitor that indicates an image processed by the image processing section;
a sensor that is mounted in the vehicle, and detects an event which occurs during travel of the vehicle; and
a control section that converts an image imaged by the camera into another image based on a detection result of the sensor.

2. The in-vehicle electronic mirror according to claim 1, wherein:
the control section controls the camera to perform imaging at a predetermined frame rate when the detection result of the sensor is a first detection result; and
the control section controls the camera to perform imaging at another frame rate which is greater than the predetermined frame rate when the detection result of the sensor is a second detection result.

3. The in-vehicle electronic mirror according to claim 1, wherein:
the control section controls the camera to perform imaging with a predetermined image quality when the detection result of the sensor is a first detection result; and
the control section controls the camera to perform imaging with another image quality which is higher than the predetermined image quality when the detection result of the sensor is a second detection result.

4. The in-vehicle electronic mirror according to claim 1, wherein:
the control section controls the camera to set an area of a center region of a screen of the monitor to a first area, perform imaging such that an image to be displayed in the center region has a predetermined image quality, set an area of peripheral regions other than the center region to a second area, and perform imaging such that an image to be displayed in the peripheral regions has another image quality which is lower than the predetermined image quality when the detection result of the sensor is a first detection result; and
the control section controls the camera to set the area of the center region of the screen of the monitor to a third area which is larger than the first area, perform imaging such that the image to be displayed in the center region has the predetermined image quality, set the area of the peripheral regions other than the center region to a fourth area, and perform imaging such that the image to be displayed in the peripheral regions has the other image quality when the detection result of the sensor is a second detection result.

5. The in-vehicle electronic mirror according to claim 1, wherein:
the control section controls the camera to perform imaging at a predetermined field angle when the detection result of the sensor is a first detection result; and
the control section controls the camera to perform imaging at another field angle which is greater than the predetermined field angle when the detection result of the sensor is a second detection result.

6. The in-vehicle electronic mirror according to claim 1, wherein:
the control section controls the monitor to indicate the image processed by the image processing section when the detection result of the sensor is a first detection result; and
the control section controls the monitor to serve as a hard mirror when the detection result of the sensor is a second detection result.

7. The in-vehicle electronic mirror according to claim 1, wherein:
the sensor obtains a first detection result when a speed of the vehicle is lower than a given speed, when a steering angle of the vehicle is smaller than a given angle, when a brightness in the region around the vehicle is smaller than a given brightness, when a gear of a transmission of the vehicle is a low speed gear, or when a directional indicator of the vehicle is in operation;
and
the sensor obtains a second detection result when the speed of the vehicle is equal to or higher than the given speed, when the steering angle of the vehicle is equal to or greater than the given angle, when the brightness in the region around the vehicle is equal to or greater than the given brightness, when the gear of the transmission of the vehicle is a high speed gear, or when the directional indicator of the vehicle is not in operation.

8. The in-vehicle electronic mirror according to claim 1, wherein the monitor indicates information representing a distance between the vehicle and a predetermined object, information representing an approach of a succeeding vehicle or an emergency vehicle, information representing a time to a destination or a distance to the destination or both, information representing an environment or an event in the region around the vehicle, information representing an installation position of the camera, information representing an electronic compass, information representing an image imaged by a camera other than the camera, or information representing a predetermined switch, the information being superimposed on the image processed by the image processing section.
